# EUROPÄISCHE PATENTSCHRIFT

(11) **EP 4 004 406 B1**
(45) Veröffentlichungstag und Bekanntmachung des Hinweises auf die Patenterteilung: **10.04.2024**
(21) Anmeldenummer: 20750613.0
(22) Anmeldetag: 24.07.2020
(51) Int. Cl.: F16H 25/06, F16H 49/00

(54) **KOAXIALGETRIEBE**
COAXIAL GEAR SET
TRAIN D'ENGRENAGES COAXIAUX

(30) Priorität: 26.07.2019 AT 506802019
(43) Veröffentlichungstag der Anmeldung: 01.06.2022
(73) Patentinhaber: Kraken Innovations GmbH, 8010 Graz (AT)
(72) Erfinder: EISELE, Philipp Simon, 8010 Graz (AT); MICHELITSCH, Michael, 8042 Graz (AT)
(74) Vertreter: KLIMENT & HENHAPEL
(86) Internationale Anmeldenummer: PCT/EP2020/070901
(87) Internationale Veröffentlichungsnummer: WO 2021/018752

(56) Entgegenhaltungen:
- EP-A1- 0 201 730
- WO-A1-01/66974
- WO-A1-2008/028540
- WO-A1-2018/229987
- CA-A- 709 203
- CN-Y- 2 327 841
- DE-A1-102015 105 520
- DE-A1-102015 105 523

## Beschreibung

### GEBIET DER ERFINDUNG

Die vorliegende Erfindung betrifft ein Koaxialgetriebe umfassend eine um eine Drehachse drehbare Kurbelwelle mit mindestens einem Pleuellager.

### STAND DER TECHNIK

Aus der DE 312164 C ist ein selbstsperrendes Schaltgetriebe bekannt, bei dem eine Anzahl sternförmig um eine Antriebswelle angeordneter Arme mit ihren inneren Enden exzentrisch auf der Antriebswelle gelagert sind, mit ihrem Mittelteil in Führungen liegen und mit ihren äußeren Enden in einen Zahnkranz eingreifen. Dabei sind die Arme als zweiarmige Hebel ausgebildet, deren Drehpunkte kreuzkopfartig geführt sind und deren inneren Enden unabhängig voneinander auf dem antreibenden Exzenter ruhen, sodass die äußeren Enden eine Pleuelbewegung ausführen und dabei aufeinander folgend in den Zahnkranz eingreifen und diesen im der Drehung der Antriebswelle entgegengesetztem Sinn antreiben. Es ergibt sich somit eine zykloidische Bewegung, und daraus resultiert ein Linienkontakt der äußeren Enden mit den Zähnen des Zahnkranzes.

Analog sind aus der US 5351568 A, der US 2005268872 A1 und der WO 0166974 A1 Getriebe bekannt, bei denen es zu einer zykloidischen Bewegung und somit zu einem Linienkontakt kommt.

Der Linienkontakt wirkt sich insofern nachteilig aus, als dieser die übertragbaren Drehmomente beschränkt.

Getriebe ohne Pleuel sind aus folgenden Druckschriften bekannt: Die EP 0201730 A1 betrifft ein Reduktionsgetriebe mit radial hin und her beweglichen, zahnartigen Elementen, die mittels einer versetzt angeordneten, drehbaren Kreisscheibe angetrieben werden. Ähnlich betreffen die DE 102015105523 A1, WO 2008028540 A1 und DE 102015105520 A1 allesamt Getriebe mit einem Zahnträger zur Aufnahme von um eine Drehachse des Getriebes angeordneten Zähnen, wobei die Zähne in dem Zahnträger verschiebbar und in radialer Richtung geführt angeordnet sind und wobei zum Antrieb der Zähne ein um die Drehachse drehbares Antriebselement in Form einer konturierten Anlaufscheibe vorgesehen ist.

### AUFGABE DER ERFINDUNG

Es ist daher Aufgabe der vorliegenden Erfindung, ein Getriebe zur Verfügung zu stellen, das den oben genannten Nachteil vermeidet. Insbesondere sollen hohe Drehmomente, vorzugsweise bei kleiner Baugröße, übertragen werden können. Besonders bevorzugt sollen ein hohes Übersetzungsverhältnis und eine hohe Genauigkeit bzw. Spielfreiheit erzielt werden.

### DARSTELLUNG DER ERFINDUNG

Zur Lösung der genannten Aufgabe ist erfindungsgemäß ein Koaxialgetriebe vorgesehen, umfassend eine um eine Drehachse drehbare Kurbelwelle mit mindestens einem Pleuellager, das Koaxialgetriebe weiters umfassend mehrere, vorzugsweise mindestens drei, Kolben, die mittels jeweils eines Pleuels mit dem mindestens einen Pleuellager verbunden sind und jeweils an einer von der Drehachse weg weisenden ersten Stirnseite eine Verzahnung mit mindestens einem Zahn aufweisen, das Koaxialgetriebe weiters umfassend eine Hohlwelle mit Innenverzahnung, wobei in einer auf die Drehachse normal stehenden Ebene betrachtet die Kolben innerhalb der Hohlwelle angeordnet sind, das Koaxialgetriebe weiters umfassend eine Führungseinheit, wobei die Kolben jeweils in der Führungseinheit linear geführt und parallel zu einer normal auf die Drehachse stehenden Radialrichtung hin und her bewegbar sind, wodurch die Verzahnungen der ersten Stirnseiten der Kolben nacheinander in Eingriff mit der Innenverzahnung und in einen von der Innenverzahnung losgelösten Zustand bringbar sind, um während des jeweiligen Eingriffs unter flächigem Kontakt zwischen der jeweiligen Verzahnung und der Innenverzahnung die Hohlwelle oder die Führungseinheit um die Drehachse weiter zu drehen.

Das erfindungsgemäße Koaxialgetriebe kann auch als Kurbelwellengetriebe bezeichnet werden.

Die Kurbelwelle stellt dabei ein Antriebselement dar bzw. kann als Antriebselement bezeichnet werden.

Vorzugsweise ist in einer auf die Drehachse normal stehenden Ebene betrachtet die Kurbelwelle zumindest abschnittsweise innerhalb der Hohlwelle angeordnet.

Das Pleuellager kann auch als Hubzapfen oder Kurbelzapfen bezeichnet werden, wobei die Pleuel auf dem mindestens einen Pleuel gelagert sind. Grundsätzlich können mehrere, bevorzugt alle Pleuel, auf einem Pleuellager gelagert sein, sodass nur ein einziges Pleuellager vorgesehen sein muss. Es können aber auch mehrere Pleuellager bzw. Hub- oder Kurbelzapfen vorgesehen sein, insbesondere bei entlang der Drehachse hintereinander angeordneten Pleueln, wobei vorzugsweise ein Kurbelzapfen pro Pleuel vorgesehen sein kann.

Es sei bemerkt, dass durch das Hintereinanderschalten mehrerer Pleuellager bzw. Kurbelzapfen und Anpassung des Drehwinkelversatzes zwischen diesen die Auflösung und/oder die Übersetzung des Getriebes beeinflusst werden kann.

Die Hohlwelle ist vorzugsweise um die Drehachse drehbar gelagert und kann als Abtriebselement fungieren.

Alternativ kann bei fixierter Hohlwelle die Führungseinheit als Abtriebselement fungieren, wofür die Führungseinheit drehbar gelagert sein muss.

Um die Hohlwelle oder ggf. die Führungseinheit in einer bestimmten Richtung weiterdrehen zu können, sind vorzugsweise drei Kolben vorgesehen. Das Weiterdrehen wird durch das flächige Pressen der Verzahnung der ersten Stirnseite eines der Kolben gegen die Innenverzahnung der Hohlwelle bewirkt, während die anderen Kolben kaum eine oder keine Presskraft auf die Innenverzahnung ausüben.

Typischerweise ist bei drei vorgesehenen Kolben ein Kolben in Eingriff mit der Innenverzahnung und presst gegen diese. Die restlichen zwei Kolben üben währenddessen keine oder nur eine geringe Presskraft auf die Innenverzahnung aus. Vorzugsweise ist zumindest einer der restlichen zwei Kolben teilweise in Eingriff mit der Innenverzahnung, um Spielfreiheit zu erzeugen. Vorzugsweise berührt zumindest einer der restlichen zwei Kolben die Innenverzahnung überhaupt nicht.

Generell kann bei mehreren Kolben durch den gleichzeitigen, zumindest teilweisen Eingriff von mindestens zwei Kolben mit der Innenverzahnung Spielfreiheit sichergestellt werden.

Ein sehr großes Übersetzungsverhältnis ergibt sich durch diese Wirkungsweise. Weiters können durch das flächige Pressen bzw. den flächigen Kontakt zwischen der Verzahnung der jeweiligen ersten Stirnseite mit der Innenverzahnung der Hohlwelle - im Gegensatz zu aus dem Stand der Technik bekannten Lösungen mit Linienkontakt bzw. linienförmigem Eingriff - sehr hohe Drehmomente von der Kurbelwelle auf die Hohlwelle oder ggf. die Führungseinheit übertragen werden.

Die Anzahl der Kolben kann entsprechend gering gehalten werden bzw. kann das erfindungsgemäße Koaxialgetriebe entsprechend kompakt dimensioniert werden. Das Vorsehen von sehr vielen Kolben, wobei mehrere Kolben gleichzeitig und im Wesentlichen gleichwirkend mit der Verzahnung ihrer ersten Stirnseiten gegen die Innenverzahnung drücken, um besonders hohe Drehmomente übertragen zu können, ist zwar auch beim erfindungsgemäßen Koaxialgetriebe möglich, aber praktisch meist nicht notwendig.

Für den flächigen Kontakt ist die lineare Bewegung der Kolben wesentlich. Darüberhinaus können die Verzahnungen und die Innenverzahnung entsprechend geometrisch ausgelegt bzw. optimiert werden, um das Pressen bzw. den flächigen Kontakt - und damit die Übertragung hoher Drehmomente - weiter zu steigern.

Mit mindestens drei Kolben kann sichergestellt werden, dass der nächste Kolben, der mit der Verzahnung seiner ersten Stirnseite gegen die Innenverzahnung flächig presst, die Hohlwelle oder ggf. die Führungseinheit nicht in die Gegenrichtung zurückdreht und es bloß zu einem Hin- und Herpendeln der Hohlwelle oder ggf. der Führungseinheit um die Drehachse kommt. Ein solcher Fall ist bei zwei Kolben hingegen grundsätzlich nicht auszuschließen, doch kann bei zwei Kolben ein zusätzliches Element, z.B. eine Art Hemmung bzw. ein Freilauf, vorgesehen sein, das bzw. der das Drehen der Hohlwelle oder ggf. der Führungseinheit nur in einer bestimmten Richtung gestattet, wodurch ein Weiterdrehen der Hohlwelle oder ggf. der Führungseinheit auch mit nur zwei Kolben ermöglicht wird.

Die Verzahnung der ersten Stirnseiten kann auch als auf der ersten Stirnseite aufgeprägte Verzahnung bezeichnet werden.

Die Führungseinheit kann einstückig oder aus mehreren Elementen zusammengesetzt aufgebaut sein.

Aufgrund der linearen Führung der Kolben in der Führungseinheit bewegen sich die Kolben entsprechend nur linear parallel zur jeweiligen Radialrichtung, wobei die dem jeweiligen Kolben zugeordnete Radialrichtung durch die Führungseinheit definiert wird.

Die linearen Führungen können insbesondere durch Hohlzylinder in der Führungseinheit ausgebildet sein, in denen die Kolben angeordnet sind. In diesem Fall wird die dem jeweiligen Kolben zugeordnete Radialrichtung durch die jeweilige Zylinderachse definiert.

Es sei nochmals bemerkt, dass, wie weiter unten noch erläutert wird, Fälle möglich sind, bei denen die Führungseinheit nicht fest ist, sondern rotieren kann. Entsprechend ändern sich dann die den Kolben zugeordneten Radialrichtungen durch die Rotation der Führungseinheit bzw. existieren mathematisch streng genommen dann über einen Zeitraum betrachtet, in welchem sich die Führungseinheit dreht, unendlich viele Radialrichtungen.

Darüberhinaus lässt sich das erfindungsgemäße Koaxialgetriebe durch ein Verbleiben eines der Kolben im oberen Totpunkt, also bei maximalem Verschub des Kolbens in der jeweiligen Radialrichtung von der Drehachse weg, sperren, wodurch die Funktionalität einer Bremse realisiert werden kann.

Ein weiterer Vorteil des erfindungsgemäßen Koaxialgetriebes besteht darin, dass eine hohe Dynamik ermöglicht wird, weil der mindestens eine Hubzapfen der Kurbelwelle eine kreisförmige Bewegung um die Drehachse beschreibt und vorzugsweise selbst einen kreisförmigen Querschnitt senkrecht auf die Drehachse aufweist, sodass ein Massenausgleich sehr einfach realisiert werden kann, beispielsweise in an sich bekannter Weise mittels Ausgleichsgewichten auf der Kurbelwelle.

Weiters kann durch die Verwendung von Pleuel und Kolben ein modularer Aufbau realisiert werden. Durch Variation der Kolben in Anzahl, Winkelversatz um die Drehachse und Verteilung auf unterschiedliche Hubzapfen kann die Getriebestufe variabel eingestellt werden. Daraus ergeben sich unterschiedliche Übersetzungen bei gleichzeitiger Möglichkeit, die Abmessungen des Getriebes beizubehalten. Der modulare Aufbau des Getriebes erlaubt es, einzelne Bauteile in Masse zu produzieren, ohne die Flexibilität im Produkt zu verlieren, und damit für eine schnelle Verfügbarkeit zu sorgen.

Um die Größe der übertragbaren Drehmomente weiter zu steigern, ist es bei einer bevorzugten Ausführungsform des erfindungsgemäßen Koaxialgetriebes vorgesehen, dass die Verzahnungen der ersten Stirnseiten jeweils mehrere, vorzugsweise drei, Zähne aufweisen. Mit der Anzahl der Zähne der Verzahnungen der ersten Stirnseiten wird die Fläche vergrößert, mit der der jeweilige Kolben gegen die Innenverzahnung pressen kann, was die Übertragung von besonders großen Drehmomenten zwischen Kurbelwelle und Hohlwelle oder ggf. Führungseinheit ermöglicht.

Bei einer bevorzugten Ausführungsform des erfindungsgemäßen Koaxialgetriebes ist vorgesehen, dass entlang der Drehachse gesehen die Pleuel hintereinander angeordnet sind. Ein solches Koaxialgetriebe ist herstellungstechnisch vorteilhaft.

Um eine besonders platzsparende Bauweise zu ermöglichen, ist es bei einer bevorzugten Ausführungsform des erfindungsgemäßen Koaxialgetriebes vorgesehen, dass die Pleuel zumindest abschnittsweise in einer gemeinsamen Ebene liegen, die normal auf die Drehachse steht. Die Pleuel können hierzu abschnittsweise verschachtelt angeordnet sein. Entsprechend kurz kann das mindestens eine Pleuellager bzw. die Kurbelwelle entlang der Drehachse dimensioniert werden.

Um eine konstruktiv einfache Lösung für eine derartige Anordnung zu ermöglichen, ist es bei einer besonders bevorzugten Ausführungsform des erfindungsgemäßen Koaxialgetriebes vorgesehen, dass in einer Ebene, die parallel zur Drehachse verläuft und/oder die Drehachse umfasst, zumindest eines, vorzugsweise zumindest zwei, der Pleuel einen im Wesentlichen U- oder J-förmigen Querschnitt aufweisen.

Bei einer bevorzugten Ausführungsform des erfindungsgemäßen Koaxialgetriebes ist vorgesehen, dass zumindest zwei der Kolben unterschiedliche Durchmesser aufweisen, wobei die Durchmesser jeweils in einer Querrichtung gemessen sind und die jeweilige Querrichtung normal auf die jeweilige Radialrichtung steht. Als Durchmesser wird hier einfach die Erstreckung in der Querrichtung bezeichnet, d.h. der Kolben muss grundsätzlich keinen kreisförmigen Querschnitt haben in einer normal auf die zugehörige Radialrichtung stehenden Ebene.

Es gibt prinzipiell unendlich viele Querrichtungen pro Radialrichtung bzw. Kolben, wobei stets einander entsprechende Querrichtungen herangezogen werden müssen, um einen sinnvollen Vergleich der Durchmesser zu ermöglichen, z.B. indem die entsprechenden Querrichtungen in derselben Ebene oder in parallelen Ebenen liegen. Insbesondere können sämtliche Querrichtungen parallel zur Drehachse verlaufen, wodurch ein Vergleich jedenfalls sinnvoll möglich ist.

Durch die unterschiedlich dimensionierten Kolben bzw. Kolbendurchmesser kann ein Massenausgleich erzielt werden, was vor allem bei hohen Drehzahlen vorteilhaft ist. Selbstverständlich sind unterschiedlich dimensionierte Kolbendurchmesser aber auch im Fall der "übereinander" angeordneten Pleuel denkbar.

Bei einer bevorzugten Ausführungsform des erfindungsgemäßen Koaxialgetriebes ist vorgesehen, dass zumindest bei einem der Kolben, vorzugsweise bei allen Kolben, mindestens ein Piezoelement vorgesehen ist, um eine parallel zur jeweiligen Radialrichtung gemessene Länge des jeweiligen Kolbens zu ändern. Auf diese Weise kann eine Längenausdehnung durch Wärme oder Abnutzung kompensiert werden.

Weiters kann durch die Verlängerung mittels Piezoelement ein erhöhter Anpressdruck, insbesondere der Verzahnungen der ersten Stirnseiten auf die Innenverzahnung, erzielt werden. Dies kann beispielsweise zur Erhöhung der Bremswirkung genutzt werden, wenn sich einer der Kolben am oberen Totpunkt befindet.

Bei einer bevorzugten Ausführungsform des erfindungsgemäßen Koaxialgetriebes ist vorgesehen, dass die Kolben jeweils auf einer der ersten Stirnseite gegenüberliegenden zweiten Stirnseite eine Verzahnung mit mindestens einem Zahn aufweisen, dass ein um die Drehachse drehbar gelagerter Innenring mit Außenverzahnung vorgesehen ist, wobei die Führungseinheit zumindest abschnittsweise zwischen dem Innenring und der Hohlwelle angeordnet ist, wobei die Verzahnungen der zweiten Stirnseiten der Kolben nacheinander in Eingriff mit der Außenverzahnung und in einen von der Außenverzahnung losgelösten Zustand bringbar sind, um während des jeweiligen Eingriffs unter flächigem Kontakt zwischen der jeweiligen Verzahnung und der Außenverzahnung den Innenring oder die Führungseinheit um die Drehachse weiter zu drehen.

Die Verzahnung der zweiten Stirnseiten kann auch als auf der zweiten Stirnseite aufgeprägte Verzahnung bezeichnet werden.

Vorzugsweise ist der Innenring um die Drehachse drehbar gelagert und hat, sofern er nicht gesperrt ist, im Prinzip die Funktion einer Welle und könnte daher auch als Innenwelle bezeichnet werden. Dessen Außenverzahnung weist zur Innenverzahnung der Hohlwelle.

Es gilt im Prinzip das zum Eingriff der Verzahnung der ersten Stirnseiten in die Innenverzahnung der Hohlwelle Gesagte analog für den Eingriff der Verzahnung der zweiten Stirnseiten in die Außenverzahnung des Innenrings, weshalb grundsätzlich auf das Oben Gesagte verwiesen wird. D.h. aufgrund des flächigen Kontakts bzw. des flächigen Pressens zwischen der Verzahnung der zweiten Stirnseite des jeweiligen Kolbens und der Außenverzahnung des Innenrings können - im Gegensatz zu Lösungen mit linienförmigem Kontakt - hohe Drehmomente zwischen Kurbelwelle und Innenring oder ggf. Führungseinheit übertragen werden.

Weiters können jeweils mehrere, insbesondere drei, Zähne bei den Verzahnungen der zweiten Stirnseiten vorgesehen sein, um besonders große Drehmomente zwischen der Kurbelwelle und dem Innenring oder ggf. der Führungseinheit zu übertragen.

Bei gebremster oder fixierter Führungseinheit treibt ein bzw. jeder Kolben abwechselnd die Hohlwelle und den Innenring an. Es können sowohl der Innenring als auch die Hohlwelle als Abtrieb fungieren. Es kann auch nur die Hohlwelle oder der Innenring als Abtrieb fungieren, wobei das jeweils andere Element gebremst oder gesperrt wird.

Da der Innenring einen kleineren Durchmesser als die Hohlwelle hat, können an diesem bei gleichen Winkelgeschwindigkeiten geringere Tangentialgeschwindigkeiten erzielt bzw. abgegriffen werden. D.h. durch den Innenring und die Hohlwelle können gleichzeitig zwei Abtriebe für unterschiedliche Geschwindigkeiten zur Verfügung gestellt werden, wodurch je nach Anwendungsfall ggf. ein zweites Getriebe eingespart werden kann.

Der Innenring kann, muss aber nicht, mit der Hohlwelle drehfest verbunden sein, wobei sich bei einer Verbindung einerseits eine höhere Auflösung des Koaxialgetriebes erreichen lässt und andererseits die Übertragung von noch größeren Drehmomenten.

Weiters sind Ausführungsvarianten mit nur zwei Kolben denkbar, bei denen mittels des Innenrings aufgrund der insgesamt vier (Kolben-)Eingriffe sichergestellt wird, dass die Hohlwelle oder ggf. die Führungseinheit nur in eine bestimmte Richtung weiterbewegt wird.

Schließlich ist es auch möglich, dass der Innenring in die entgegengesetzte Richtung gedreht wird im Vergleich zur Drehrichtung der Hohlwelle.

Bei einer besonders bevorzugten Ausführungsform des erfindungsgemäßen Koaxialgetriebes ist vorgesehen, dass die Innenverzahnung der Hohlwelle und die Außenverzahnung des Innenrings gleich viele Zähne aufweisen. Gleiche Winkelgeschwindigkeiten von Hohlwelle und Innenring können so garantiert werden. Die Geometrien bzw. Konturen der Innenverzahnung und der Außenverzahnung sind entsprechend unterschiedlich - d.h. mit vergleichsweise größeren Zähnen bzw. Zahnabständen der Innenverzahnung der Hohlwelle - ausgelegt.

Bei einer bevorzugten Ausführungsform des erfindungsgemäßen Koaxialgetriebes ist vorgesehen, dass bei mindestens zwei der Kolben die jeweiligen Radialrichtungen einen um die Drehachse gemessenen Winkel ungleich null einschließen. D.h. die Kolben weisen zumindest teilweise einen Winkelversatz zueinander auf. Dies beeinflusst das Verhalten des Koaxialgetriebes. Neben einer harmonischen Drehung sind auch disharmonische Bewegungen möglich, wobei ein Einsatzgebiet für solche Koaxialgetriebe z.B. Rüttler sein können. Der Winkelversatz führt dazu, dass Zähne der Innenverzahnung je nach Winkel der Kolben zueinander übersprungen werden und/oder sich die Drehrichtung der Hohlwelle oder ggf. der Führungseinheit ändert.

Bei einer bevorzugten Ausführungsform des erfindungsgemäßen Koaxialgetriebes ist vorgesehen, dass die Kurbelwelle hohl ausgeführt ist, um Kabel verdrehungsfrei durch die Kurbelwelle, vorzugsweise entlang der Drehachse, führen zu können.

Bei einer bevorzugten Ausführungsform des erfindungsgemäßen Koaxialgetriebes ist vorgesehen, dass die Führungseinheit unbeweglich zur Drehachse angeordnet ist. In diesem Fall wird die Hohlwelle weiterbewegt und fungiert als Abtriebselement. Ggf. kann bei solchen Ausführungsvarianten auch der Innenring (falls vorhanden) weiterbewegt werden, der wiederum gebremst sein kann oder als Abtriebselement fungieren kann.

Bei einer bevorzugten Ausführungsform des erfindungsgemäßen Koaxialgetriebes ist vorgesehen, dass die Führungseinheit um die Drehachse drehbar gelagert ist, wobei vorzugsweise Mittel vorgesehen sind, um eine Drehung der Führungseinheit um die Drehachse zu bremsen. Bei gebremster Führungseinheit kann weiterhin die Hohlwelle gedreht und als Abtriebselement genutzt werden. Mittel fürs Bremsen der Führungseinheit sind an sich bekannt, beispielsweise kann mittels Reibung oder mittels Wirbelstrom gebremst werden.

Sofern hingegen die Hohlwelle fixiert oder - mit an sich bekannten Mitteln, wie oben für die Führungseinheit beispielhaft genannt (d.h. z.B. mittels Reibung oder Wirbelstrom) - gebremst wird, fungiert die Führungseinheit als Abtriebselement.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Schnittansicht eines erfindungsgemäßen Koaxialgetriebes, wobei entlang einer Drehachse gesehen Pleuel hintereinander angeordnet sind
- Fig. 2: eine Schnittansicht gemäß der Schnittlinie A-A aus Fig. 1, wobei die Pfeile die Blickrichtung andeuten
- Fig. 3: eine schematische Schnittansicht einer weiteren Ausführungsform des erfindungsgemäßen Koaxialgetriebes, wobei die Pleuel zumindest abschnittsweise in einer gemeinsamen Ebene liegen, die normal auf die Drehachse steht
- Fig. 4: eine Schnittansicht gemäß der Schnittlinie B-B aus Fig. 3, wobei die Pfeile die Blickrichtung andeuten
- Fig. 5: eine schematische Schnittansicht einer weiteren Ausführungsform des erfindungsgemäßen Koaxialgetriebes analog zur Ausführungsform der Fig. 3, wobei Verzahnungen von ersten Stirnseiten von Kolben mehrere Zähne aufweisen
- Fig. 6: eine schematische Schnittansicht einer weiteren Ausführungsform des erfindungsgemäßen Koaxialgetriebes analog zur Ausführungsform der Fig. 1, wobei die Kolben Piezoelemente aufweisen
- Fig. 7: eine schematische Schnittansicht einer weiteren Ausführungsform des erfindungsgemäßen Koaxialgetriebes analog zur Ausführungsform der Fig. 1, wobei ein Innenring mit Außenverzahnung vorgesehen ist

### WEGE ZUR AUSFÜHRUNG DER ERFINDUNG

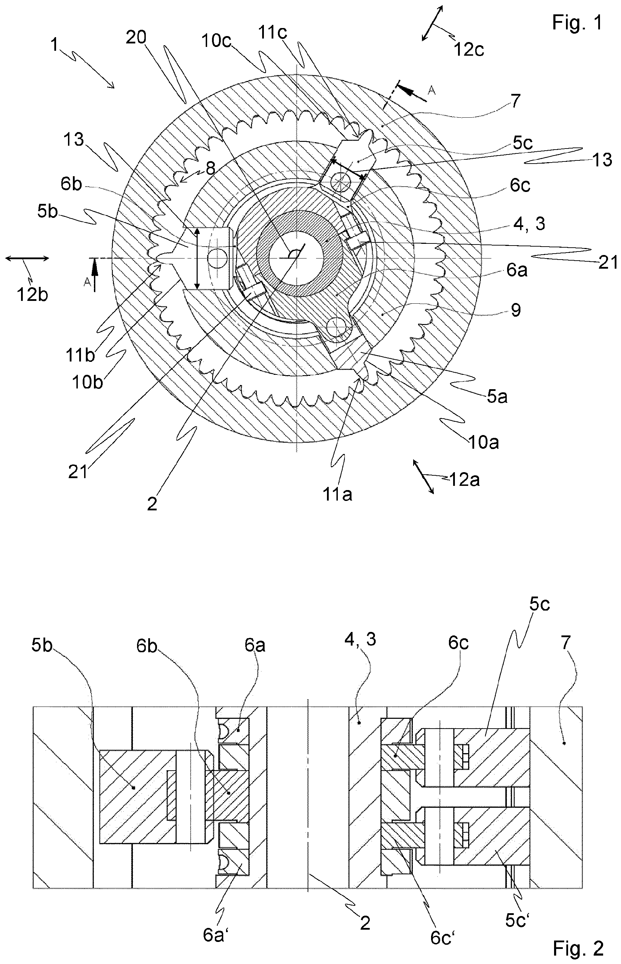

In Fig. 1 ist in einer schematischen Ansicht eines Schnittes normal auf eine Drehachse 2 ein erfindungsgemäßes Koaxialgetriebe 1 bzw. Kurbelwellengetriebe dargestellt. Das Koaxialgetriebe 1 umfasst eine um die Drehachse 2 drehbare Kurbelwelle 3 mit mindestens einem Pleuellager 4, wobei im dargestellten Ausführungsbeispiel genau ein Pleuellager 4 bzw. genau ein Hub- oder Kurbelzapfen vorgesehen ist.

Mit dem Pleuellager 4 sind mehrere Kolben in an sich bekannter Weise verbunden bzw. sind die Kolben am Pleuellager 4 beweglich gelagert - z.B. wird jeweils ein geteiltes Pleuelauge von Pleueln 6a, 6b, 6c mittels Schrauben 21, vgl. Fig. 1, am Pleuellager 4 befestigt und sind Kolben 5a, 5b, 5c über Kolbenbolzen mit weiteren Pleuelaugen der Pleuel 6a, 6b, 6c verbunden. Im Ausführungsbeispiel der Fig. 1 sind insgesamt fünf Kolben vorgesehen, wobei in Fig. 1 nur die drei Kolben 5a, 5b, 5c sichtbar sind. Der Kolben 5a ist über das Pleuel 6a mit der Kurbelwelle 3 bzw. dem Pleuellager 4 verbunden, der Kolben 5b über das Pleuel 6b und der Kolben 5c über das Pleuel 6c.

Sämtliche Kolben 5a, 5b, 5c weisen jeweils eine von der Drehachse 2 weg weisende erste Stirnseite 10a, 10b, 10c mit einer aufgeprägten Verzahnung 11a, 11b, 11c auf, wobei die jeweilige Verzahnung 11a, 11b, 11c im dargestellten Ausführungsbeispiel genau einen Zahn aufweist.

Im dargestellten Ausführungsbeispiel ist, wie aus Fig. 1 hervorgeht, die Kurbelwelle 3 hohl entlang der Drehachse 2 ausgebildet, was z.B. das verdrehungsfreie Durchführen von Kabeln (nicht dargestellt) gestattet.

Weiters ist beim Koaxialgetriebe 1 eine Hohlwelle 7 vorgesehen, die eine Innenverzahnung 8 aufweist. In der Bildebene der Fig. 1, die senkrecht auf die Drehachse 2 steht, sind die Kolben 5a, 5b, 5c - und zumindest abschnittsweise die Kurbelwelle 3 - innerhalb der Hohlwelle 7 angeordnet. Dies gilt auch für eine Führungseinheit 9, in welcher die Kolben 5a, 5b, 5c jeweils linear geführt und parallel zu einer normal auf die Drehachse 2 stehenden Radialrichtung 12a, 12b, 12c hin und her bewegbar sind. Hierzu weist die Führungseinheit 9 im dargestellten Ausführungsbeispiel Hohlzylinder auf, die als lineare Führungen für die Kolben 5a, 5b, 5c fungieren.

Durch das Hin- und Herbewegen der Kolben 5a, 5b, 5c werden die Verzahnungen 11a, 11b, 11c der ersten Stirnseiten 10a, 10b, 10c der Kolben 5a, 5b, 5c nacheinander in Eingriff mit der Innenverzahnung 8 und in einen von der Innenverzahnung 8 losgelösten Zustand gebracht, wobei aufgrund der linearen Bewegung der Kolben 5a, 5b, 5c während des jeweiligen Eingriffs ein flächiger Kontakt zwischen der jeweiligen Verzahnung 11a, 11b, 11c und der Innenverzahnung 8 sichergestellt werden kann und die jeweilige Verzahnung 11a, 11b, 11c flächig gegen die Innenverzahnung 8 presst. Hierdurch wird die Hohlwelle ein Stück weiter um die Drehachse 2 gedreht, wenn die Führungseinheit 9 unbeweglich zur Drehachse 2 angeordnet ist oder wenn die Führungseinheit 9 zwar um die Drehachse 2 drehbar angeordnet ist, aber gebremst ist. Wenn hingegen die Hohlwelle 7 fixiert bzw. unbeweglich zur Drehachse 2 ist oder gebremst ist, wird die (um die Drehachse 2 drehbar gelagerte) Führungseinheit 9 ein Stück weiter gedreht. Aufgrund des flächigen Eingreifens bzw. Pressens können sehr hohe Drehmomente von der Kurbelwelle 3 auf die Hohlwelle 7 oder ggf. die Führungseinheit 9 übertragen werden.

Im Ausführungsbeispiel der Fig. 1 sind die Pleuel 6a, 6b, 6c auf der Kurbelwelle 3 bzw. dem Pleuellager 4 entlang der Drehachse 2 gesehen hintereinander angeordnet. Dies ist in der Schnittansicht der Fig. 2 (gemäß der Schnittlinie A-A aus Fig. 1, wobei die Pfeile die Blickrichtung andeuten) illustriert, in der auch noch ein vierter Kolben 5c' und ein zugehöriges Pleuel 6c` sowie ein Pleuel 6a' eines fünften Kolbens (nicht dargestellt, dieser Kolben liegt in Blickrichtung auf die Zeichenebene der Fig. 1 gesehen hinter den in Fig. 1 dargestellten Elementen bzw. ist entlang der Drehachse 2 gesehen der letzte Kolben, wobei der Kolben 5a der erste ist) erkennbar sind.

Um, insbesondere für relativ hohe Drehzahlen, einen effektiven und gleichzeitig platzsparenden Massenausgleich sicherzustellen, sind beim in Fig. 1 dargestellten Ausführungsbeispiel unterschiedliche Kolbendurchmesser 13 vorgesehen, wobei die Kolbendurchmesser 13 jeweils in einer Querrichtung gemessen sind und die jeweilige Querrichtung normal auf die jeweilige Radialrichtung 12a, 12b, 12c steht. Konkret weist der Kolben 5b einen größeren Kolbendurchmesser 13 auf als die Kolben 5a und 5b, wobei alle Kolben bis auf den Kolben 5b denselben Kolbendurchmesser 13 aufweisen (daher ist aus Klarheitsgründen in Fig. 1 der Kolbendurchmesser 13 des Kolbens 5a nicht extra eingezeichnet).

Es sei bemerkt, dass im dargestellten Ausführungsbeispiel die Kolben 5a, 5b, 5c in Abschnitten, die in den Hohlzylindern der Führungseinheit 9 angeordnet sind, einen kreisförmigen Querschnitt aufweisen, wobei der jeweilige Querschnitt in einer Ebene normal zur jeweiligen Radialrichtung 12a, 12b, 12c liegt.

Wie ebenfalls aus Fig. 1 und Fig. 2 hervorgeht, weisen manche Kolben 5a, 5b, 5c einen um die Drehachse 2 gemessenen Winkelversatz 20 zueinander auf. D.h. die mit den jeweiligen Kolben 5a, 5b, 5c assoziierten Radialrichtungen 12a, 12b, 12c schließen miteinander jeweils einen um die Drehachse 2 gemessenen Winkel ungleich null ein. Konkret beträgt im dargestellten Ausführungsbeispiel der Winkelversatz 20 zwischen dem Kolben 5a und dem Kolben 5b bzw. der Winkel zwischen der Radialrichtung 12a und der Radialrichtung 12b 120°. Analoges gilt für den Winkelversatz 20 zwischen dem Kolben 5b oder 5c und dem Kolben 5c oder 5a bzw. den Winkel zwischen der Radialrichtung 12b oder 12c und der Radialrichtung 12c oder 12a.

Der Kolben 5c` ist an derselben Winkelposition rund um die Drehachse 2 angeordnet wie der Kolben 5c, vgl. Fig. 2. Der fünfte Kolben (nicht dargestellt) ist an derselben Winkelposition rund um die Drehachse 2 angeordnet wie der Kolben 5a.

Der Winkelversatz 20 kann dazu führen, dass Zähne der Innenverzahnung 8 je nach Winkel der Kolben 5a, 5b, 5c zueinander übersprungen werden und/oder sich die Drehrichtung der Hohlwelle 7 oder ggf. der Führungseinheit 9 ändert. D.h. das Verhalten des Koaxialgetriebes 1 kann durch den Winkelversatz 20 beeinflusst werden.

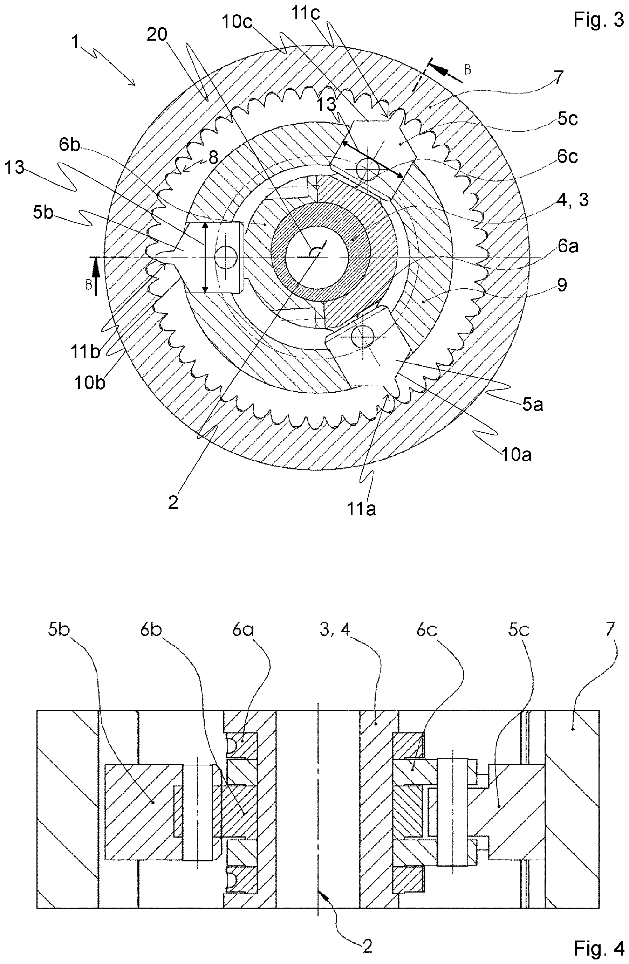

Fig. 3 zeigt eine schematische Schnittansicht einer weiteren Ausführungsform des erfindungsgemäßen Koaxialgetriebes 1 mit genau drei Kolben 5a, 5b, 5c und drei zugehörigen Pleueln 6a, 6b, 6c, wobei die Pleuel 6a, 6b, 6c entlang der Drehachse 2 gesehen nicht hintereinander liegen, sondern zumindest abschnittsweise in einer gemeinsamen Ebene liegen, die normal auf die Drehachse 2 steht. Diese Ausführungsform ist entsprechend extrem kompakt gebaut, da die Dimensionierung parallel zur Drehachse 2 entsprechend kurz gehalten werden kann.

Die Kolben 5a, 5b, 5c im Ausführungsbeispiel der Fig. 3 weisen denselben Kolbendurchmesser 13 auf. Ein Massenausgleich kann beispielsweise in an sich bekannter Weise mittels Ausgleichsgewichten auf der Kurbelwelle 3 erfolgen.

Wie aus der Schnittansicht der Fig. 4 (gemäß der Schnittlinie B-B aus Fig. 3, wobei die Pfeile die Blickrichtung andeuten) hervorgeht, wird diese Anordnung der Pleuel 6a, 6b, 6c "übereinander" möglich, indem die Pleuel 6a und 6c in einer Ebene, die parallel zur Drehachse 2 verläuft und/oder die Drehachse 2 umfasst, einen im Wesentlichen U-förmigen Querschnitt aufweisen. Das Pleuel 6b weist einen im Wesentlichen I-förmigen Querschnitt auf, der entlang der Drehachse 2 gesehen zwischen jenen Abschnitten des Pleuels 6c angeordnet ist, die die zwei parallelen Schenkel der U-Form des Querschnitts des Pleuels 6c ausbilden. Besagte Abschnitte des Pleuels 6c sind entlang der Drehachse 2 gesehen wiederum zwischen jenen Abschnitten des Pleuels 6a angeordnet, die die zwei parallelen Schenkel der U-Form des Querschnitts des Pleuels 6a ausbilden.

Ansonsten gilt auch für die Ausführungsform der Fig. 3 das zur Ausführungsform der Fig. 1 Gesagte analog. Insbesondere weisen auch die Kobeln 5a, 5b, 5c der Ausführungsform der Fig. 3 einen wechselseitigen Winkelversatz 20 von 120° auf.

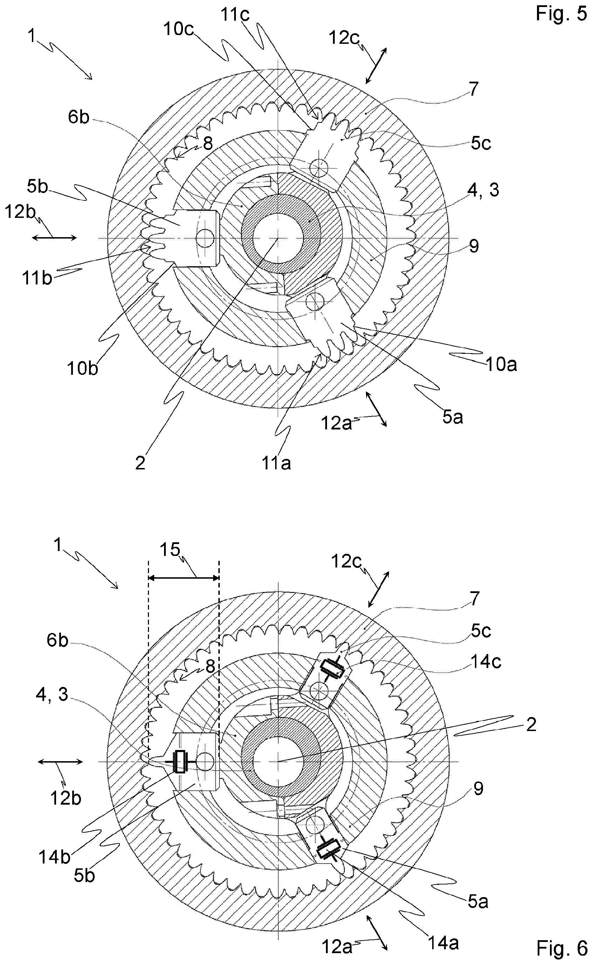

Um die Größe der übertragbaren Drehmomente weiter zu erhöhen, können die Verzahnungen 11a, 11b, 11c jeweils mehrere Zähne aufweisen. Ein derartiges Ausführungsbeispiel ist in Fig. 5 illustriert, welches sonst jenem Ausführungsbeispiel der Fig. 3 entspricht. Konkret weisen im Ausführungsbeispiel der Fig. 5 die Verzahnungen 11a, 11b, 11c jeweils drei Zähne auf, wodurch die Höhe der übertragbaren Drehmomente im Vergleich zum Ausführungsbeispiel der Fig. 3 deutlich gesteigert werden kann.

Fig. 6 zeigt eine schematische Schnittansicht einer weiteren Ausführungsform des erfindungsgemäßen Koaxialgetriebes 1 analog zur Ausführungsform der Fig. 1, wobei die Kolben 5a, 5b, 5c Piezoelemente 14a, 14b, 14c aufweisen. Mittels der Piezoelemente 14a, 14b, 14c kann eine parallel zur jeweiligen Radialrichtung 12a, 12b, 12c gemessene Kolbenlänge 15 (in Fig. 6 aus Klarheitsgründen nur für den Kolben 5b eingezeichnet) des jeweiligen Kolbens 5a, 5b, 5c geändert werden. Auf diese Weise kann eine Längenausdehnung der Kolben 5a, 5b, 5c durch Wärme oder Abnutzung kompensiert werden. Weiters kann durch eine Vergrößerung der Kolbenlänge 15 mittels der Piezoelemente 14a, 14b, 14c ein erhöhter Anpressdruck, insbesondere der Verzahnungen 11a, 11b, 11c der ersten Stirnseiten 10a, 10b, 10c auf die Innenverzahnung 8, erzielt werden.

Sofern die Kolben 5a, 5b, 5c auch jeweils auf einer der ersten Stirnseite 10a, 10b, 10c gegenüberliegenden zweiten Stirnseite 16a, 16b, 16c eine aufgeprägte Verzahnung 17a, 17b, 17c aufweisen, kann auch dort ggf. ein Anpressdruck mittels der Piezoelemente 14a, 14b, 14c erhöht werden.

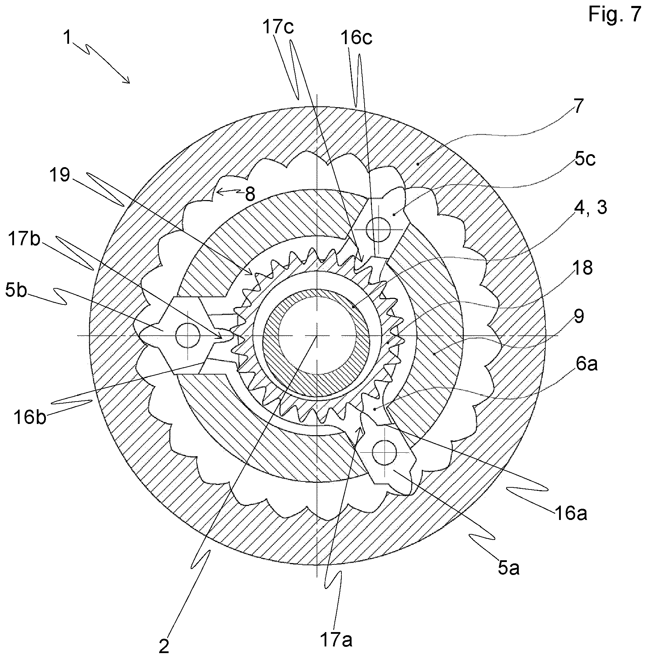

Eine Ausführungsform, bei welcher die Kolben 5a, 5b, 5c zweite Stirnseiten 16a, 16b, 16c mit Verzahnungen 17a, 17b, 17c aufweisen, ist in Fig. 7 dargestellt. Diese Ausführungsform weist außerdem einen Innenring 18 auf und ist sonst analog zur Ausführungsform der Fig. 1 aufgebaut. Entsprechend wird grundsätzlich auf das oben zur Ausführungsform der Fig. 1 Gesagte verwiesen.

Die Verzahnungen 17a, 17b, 17c weisen im dargestellten Ausführungsbeispiel jeweils einen Zahn auf, mehrere Zähne pro Verzahnung 17a, 17b, 17c sind jedoch möglich.

Der Innenring 18 hat eine zur Innenverzahnung 8 weisende Außenverzahnung 19 und ist um die Drehachse 2 drehbar gelagert. Die Führungseinheit 9 ist zumindest abschnittsweise zwischen dem Innenring 18 und der Hohlwelle 7 angeordnet, wobei die Verzahnungen 17a, 17b, 17c der zweiten Stirnseiten 16a, 16b, 16c der Kolben 5a, 5b, 5c nacheinander in Eingriff mit der Außenverzahnung 19 und in einen von der Außenverzahnung 19 losgelösten Zustand bringbar sind.

Während des jeweiligen Eingriffs kann aufgrund der linearen Bewegung der Kolben 5a, 5b, 5c ein flächiger Kontakt zwischen der jeweiligen Verzahnung 17a, 17b, 17c und der Außenverzahnung 19 des Innenring 18 sichergestellt werden und kann die jeweilige Verzahnung 17a, 17b, 17c flächig gegen die Außenverzahnung 19 pressen.

Hierdurch wird der Innenring 18 ein Stück weiter um die Drehachse 2 gedreht, wenn die Führungseinheit 9 unbeweglich zur Drehachse 2 angeordnet ist oder wenn die Führungseinheit 9 zwar um die Drehachse 2 drehbar angeordnet ist, aber gebremst ist. Genauer treibt bei gebremster oder fixierter Führungseinheit 9 ein bzw. jeder Kolben 5a, 5b, 5c abwechselnd die Hohlwelle 7 und den Innenring 18 an. Es können somit sowohl der Innenring 18 als auch die Hohlwelle 7 als Abtrieb fungieren.

Es kann auch nur die Hohlwelle 7 oder der Innenring 18 als Abtrieb fungieren, wobei das jeweils andere Element gebremst oder gesperrt wird.

Denkbar wäre natürlich auch, dass sowohl die Hohlwelle 7 als auch der Innenring 18 fixiert sind, sodass nur die Führungseinheit 9 bewegt wird und als Abtrieb fungieren kann.

Insbesondere im Gegensatz zu Lösungen mit linienförmigem Kontakt können sehr hohe Drehmomente zwischen Kurbelwelle 3 und Innenring 18 oder ggf. Führungseinheit 9 übertragen werden.

Im Ausführungsbeispiel der Fig. 7 weist die Außenverzahnung 19 genau gleich viele Zähne auf wie die Innenverzahnung 8. Die Geometrien bzw. Konturen der Innenverzahnung 8 und der Außenverzahnung 19 sind entsprechend unterschiedlich - d.h. mit vergleichsweise größeren Zähnen bzw. Zahnabständen der Innenverzahnung 8 der Hohlwelle 7 - ausgelegt. Entsprechend drehen sich die Hohlwelle 7 und der Innenring 18 mit derselben Winkelgeschwindigkeit. Letzteres kann auch durch eine drehfeste Verbindung der Hohlwelle 7 mit dem Innenring 18 erreicht werden.

Da der Innenring 18 einen kleineren Durchmesser als die Hohlwelle 7 hat, können an diesem bei gleichen Winkelgeschwindigkeiten geringere Tangentialgeschwindigkeiten erzielt bzw. abgegriffen werden. D.h. durch den Innenring 18 und die Hohlwelle 7 können gleichzeitig zwei Abtriebe für unterschiedliche Geschwindigkeiten zur Verfügung gestellt werden, wodurch je nach Anwendungsfall ggf. ein zweites Getriebe eingespart werden kann.

### BEZUGSZEICHENLISTE

1 Koaxialgetriebe
2 Drehachse
3 Kurbelwelle
4 Pleuellager
5a,5b,5c,5c` Kolben
6a, 6a `, 6b, 6c, 6c ` Pleuel
7 Hohlwelle
8 Innenverzahnung der Hohlwelle
9 Führungseinheit
10a,10b,10c Erste Stirnseite des Kolbens
11a,11b,11c Verzahnung auf der ersten Stirnseite
12a,12b,12c Radialrichtung
13 Kolbendurchmesser
14a,14b,14c Piezoelement
15 Kolbenlänge
16a,16b,16c Zweite Stirnseite des Kolbens
17a,17b,17c Verzahnung auf der zweiten Stirnseite
18 Innenring
19 Außenverzahnung des Innenrings
20 Winkelversatz
21 Schraube

## Patentansprüche

1. Koaxialgetriebe (1) umfassend eine um eine Drehachse (2) drehbare Kurbelwelle (3) mit mindestens einem Pleuellager (4),
das Koaxialgetriebe (1) weiters umfassend mehrere, vorzugsweise mindestens drei, Kolben (5a,5b,5c), die mittels jeweils eines Pleuels (6a,6b,6c) mit dem mindestens einen Pleuellager (4) verbunden sind und jeweils an einer von der Drehachse (3) weg weisenden ersten Stirnseite (10a,10b,10c) eine Verzahnung (11a,11b,11c) mit mindestens einem Zahn aufweisen,
das Koaxialgetriebe (1) weiters umfassend eine Hohlwelle (7) mit Innenverzahnung (8), wobei in einer auf die Drehachse (2) normal stehenden Ebene betrachtet die Kolben (5a,5b,5c) innerhalb der Hohlwelle (7) angeordnet sind, das Koaxialgetriebe (1) weiters umfassend eine Führungseinheit (9), wobei die Kolben (5a,5b,5c) jeweils in der Führungseinheit (9) linear geführt und parallel zu einer normal auf die Drehachse (2) stehenden Radialrichtung (12a,12b,12c) hin und her bewegbar sind, wodurch die Verzahnungen (11a,11b,11c) der ersten Stirnseiten (10a,10b,10c) der Kolben (5a,5b,5c) nacheinander in Eingriff mit der Innenverzahnung (8) und in einen von der Innenverzahnung (8) losgelösten Zustand bringbar sind, um während des jeweiligen Eingriffs unter flächigem Kontakt zwischen der jeweiligen Verzahnung (11a,11b,11c) und der Innenverzahnung (8) die Hohlwelle (7) oder die Führungseinheit (9) um die Drehachse (2) weiter zu drehen.

2. Koaxialgetriebe (1) nach Anspruch 1, **dadurch gekennzeichnet, dass** die Verzahnungen (11a,11b,11c) der ersten Stirnseiten (10a,10b,10c) jeweils mehrere, vorzugsweise drei, Zähne aufweisen.

3. Koaxialgetriebe (1) nach einem der Ansprüche 1 bis 2, **dadurch gekennzeichnet, dass** entlang der Drehachse (2) gesehen die Pleuel (6a,6b,6c) hintereinander angeordnet sind.

4. Koaxialgetriebe (1) nach einem der Ansprüche 1 bis 2, **dadurch gekennzeichnet, dass** die Pleuel (6a,6b,6c) zumindest abschnittsweise in einer gemeinsamen Ebene liegen, die normal auf die Drehachse (2) steht.

5. Koaxialgetriebe (1) nach Anspruch 4, **dadurch gekennzeichnet, dass** in einer Ebene, die parallel zur Drehachse (2) verläuft und/oder die Drehachse (2) umfasst, zumindest eines, vorzugsweise zumindest zwei, der Pleuel (6a,6b,6c) einen im Wesentlichen U- oder J-förmigen Querschnitt aufweisen.

6. Koaxialgetriebe (1) nach einem der Ansprüche 1 bis 5, **dadurch gekennzeichnet, dass** zumindest zwei der Kolben (5a,5b,5c) unterschiedliche Durchmesser (13) aufweisen, wobei die Durchmesser (13) jeweils in einer Querrichtung gemessen sind und die jeweilige Querrichtung normal auf die jeweilige Radialrichtung (12a,12b,12c) steht.

7. Koaxialgetriebe (1) nach einem der Ansprüche 1 bis 6, **dadurch gekennzeichnet, dass** zumindest bei einem der Kolben (5a,5b,5c), vorzugsweise bei allen Kolben (5a,5b,5c), mindestens ein Piezoelement (14a,14b,14c) vorgesehen ist, um eine parallel zur jeweiligen Radialrichtung (12a,12b,12c) gemessene Länge (15) des jeweiligen Kolbens (5a,5b,5c) zu ändern.

8. Koaxialgetriebe (1) nach einem der Ansprüche 1 bis 7, **dadurch gekennzeichnet, dass** die Kolben (5a,5b,5c) jeweils auf einer der ersten Stirnseite (10a,10b,10c) gegenüberliegenden zweiten Stirnseite (16a,16b,16c) eine Verzahnung (17a,17b,17c) mit mindestens einem Zahn aufweisen, dass ein um die Drehachse (2) drehbar gelagerter Innenring (18) mit Außenverzahnung (19) vorgesehen ist, wobei die Führungseinheit (9) zumindest abschnittsweise zwischen dem Innenring (18) und der Hohlwelle (7) angeordnet ist, wobei die Verzahnungen (17a,17b,17c) der zweiten Stirnseiten (16a,16b,16c) der Kolben (5a,5b,5c) nacheinander in Eingriff mit der Außenverzahnung (19) und in einen von der Außenverzahnung (19) losgelösten Zustand bringbar sind, um während des jeweiligen Eingriffs unter flächigem Kontakt zwischen der jeweiligen Verzahnung (17a,17b,17c) und der Außenverzahnung (19) den Innenring (18) oder die Führungseinheit (9) um die Drehachse (2) weiter zu drehen.

9. Koaxialgetriebe (1) nach Anspruch 8, **dadurch gekennzeichnet, dass** die Innenverzahnung (8) der Hohlwelle (7) und die Außenverzahnung (19) des Innenrings (18) gleich viele Zähne aufweisen.

10. Koaxialgetriebe (1) nach einem der Ansprüche 1 bis 9, **dadurch gekennzeichnet, dass** bei mindestens zwei der Kolben (5a,5b,5c) die jeweiligen Radialrichtungen (12a,12b,12c) einen um die Drehachse (2) gemessenen Winkel (20) ungleich null einschließen.

11. Koaxialgetriebe (1) nach einem der Ansprüche 1 bis 10, **dadurch gekennzeichnet, dass** die Kurbelwelle (3) hohl ausgeführt ist.

12. Koaxialgetriebe (1) nach einem der Ansprüche 1 bis 11, **dadurch gekennzeichnet, dass** die Führungseinheit (9) unbeweglich zur Drehachse (2) angeordnet ist.

13. Koaxialgetriebe (1) nach einem der Ansprüche 1 bis 11, **dadurch gekennzeichnet, dass** die Führungseinheit (9) um die Drehachse (2) drehbar gelagert ist, wobei vorzugsweise Mittel vorgesehen sind, um eine Drehung der Führungseinheit (9) um die Drehachse (2) zu bremsen.

## Claims

1. Coaxial transmission (1), comprising a crankshaft (3) which is rotatable about an axis of rotation (2) and has at least one connecting rod bearing (4),
the coaxial transmission (1) further comprising a plurality of, preferably at least three, pistons (5a, 5b, 5c) which are each connected to the at least one connecting rod bearing (4) by means of a connecting rod (6a, 6b, 6c) and each have a toothing (11a, 11b, 11c) with at least one tooth on a first end face (10a, 10a, 10c) facing away from the axis of rotation (3), the coaxial transmission (1) further comprising a hollow shaft (7) with internal toothing (8), wherein the pistons (5a, 5b, 5c) are arranged inside the hollow shaft (7) when viewed in a plane normal to the axis of rotation (2),
the coaxial transmission (1) further comprising a guide unit (9), wherein the pistons (5a, 5b, 5c) are each linearly guided in the guide unit (9) and can be moved back and forth parallel to a radial direction (12a, 12b, 12c) which is normal to the axis of rotation (2), whereby the toothings (11a, 11b, 11c) of the first end faces (10a, 10b, 10c) of the pistons (5a, 5b, 5c) can be brought successively into engagement with the internal toothing (8) and into a state disengaged from the internal toothing (8) in order to further rotate the hollow shaft (7) or the guide unit (9) about the axis of rotation (2) during the respective engagement with two-dimensional contact between the respective toothing (11a, 11b, 11c) and the internal toothing (8).

2. Coaxial transmission (1) according to claim 1, **characterized in that** the toothings (11a, 11b, 11c) of the first end faces (10a, 10b, 10c) each have a plurality of, preferably three, teeth.

3. Coaxial transmission (1) according to one of claims 1 to 2, **characterized in that** the connecting rods (6a, 6b, 6c) are arranged one behind the other as seen along the axis of rotation (2) .

4. Coaxial transmission (1) according to one of claims 1 to 2, **characterized in that** the connecting rods (6a, 6b, 6c) lie at least in sections in a common plane which is normal to the axis of rotation (2).

5. Coaxial transmission (1) according to claim 4, **characterized in that** in a plane which extends parallel to the axis of rotation (2) and/or comprises the axis of rotation (2), at least one, preferably at least two, of the connecting rods (6a, 6b, 6c) have a substantially U-shaped or J-shaped cross-section.

6. Coaxial transmission (1) according to one of claims 1 to 5, **characterized in that** at least two of the pistons (5a, 5b, 5c) have different diameters (13), wherein the diameters (13) are each measured in a transverse direction and the respective transverse direction is normal to the respective radial direction (12a, 12b, 12c) .

7. Coaxial transmission (1) according to one of claims 1 to 6, **characterized in that** at least one piezo element (14a, 14b, 14c) is provided in at least one of the pistons (5a, 5b, 5c), preferably in all pistons (5a, 5b, 5c), in order to change a length (15) of the respective piston (5a, 5b, 5c) measured parallel to the respective radial direction (12a, 12b, 12c).

8. Coaxial transmission (1) according to one of claims 1 to 7, **characterized in that** the pistons (5a, 5b, 5c) each have, on a second end face (16a, 16b, 16c) opposite the first end face (10a, 10b, 10c), a toothing (17a, 17b, 17c) with at least one tooth, **in that** an inner ring (18) with external toothing (19) rotatably mounted about the axis of rotation (2) is provided, wherein the guide unit (9) is arranged at least in sections between the inner ring (18) and the hollow shaft (7), wherein the toothings (17a, 17b, 17c) of the second end faces (16a, 16b, 16c) of the pistons (5a, 5b, 5c) can be brought successively into engagement with the external toothing (19) and into a state disengaged from the external toothing (19), in order to further rotate the inner ring (18) or the guide unit (9) about the axis of rotation (2) during the respective engagement with two-dimensional contact between the respective toothing (17a, 17b, 17c) and the external toothing (19) .

9. Coaxial transmission (1) according to claim 8, **characterized in that** the internal toothing (8) of the hollow shaft (7) and the external toothing (19) of the inner ring (18) have the same number of teeth.

10. Coaxial transmission (1) according to one of claims 1 to 9, **characterized in that** in at least two of the pistons (5a, 5b, 5c) the respective radial directions (12a, 12b, 12c) enclose an angle (20) not equal to zero measured about the axis of rotation (2).

11. Coaxial transmission (1) according to one of claims 1 to 10, **characterized in that** the crankshaft (3) is of hollow design.

12. Coaxial transmission (1) according to one of claims 1 to 11, **characterized in that** the guide unit (9) is arranged immovably with respect to the axis of rotation (2).

13. Coaxial transmission (1) according to one of claims 1 to 11, **characterized in that** the guide unit (9) is mounted rotatably about the axis of rotation (2), wherein preferably means are provided to brake a rotation of the guide unit (9) about the axis of rotation (2).

## Revendications

1. Engrenage coaxial (1) comprenant un vilebrequin (3) capable de rotation autour d'un axe de rotation (2) et muni d'au moins un palier de bielle (4), lequel engrenage coaxial (1) comprend aussi plusieurs pistons (5a, 5b, 5c), de préférence trois, qui sont reliés chacun au moyen d'une bielle (6a, 6b, 6c) à l'au moins un palier de bielle (4) et présentent chacun sur une première face (10a, 10b, 10c) tournée à l'opposé de l'axe de rotation (3) une denture (11a, 11b, 11c) qui comprend au moins une dent, lequel engrenage coaxial (1) comprend en outre un arbre creux (7) muni d'une denture interne (8), les pistons (5a, 5b, 5c) étant disposés à l'intérieur de l'arbre creux (7), vus dans un plan perpendiculaire à l'axe de rotation (2), lequel engrenage coaxial (1) comprend en outre une unité de guidage (9), les pistons (5a, 5b, 5c) étant guidés chacun de façon linéaire dans l'unité de guidage (9) et mobiles en va-et-vient parallèlement à une direction radiale (12a, 12b, 12c) perpendiculaire à l'axe de rotation (2), de sorte que les dentures (11a, 11b, 11c) des premières faces (10a, 10b, 10c) des pistons (5a, 5b, 5c) peuvent être engagées l'une après l'autre dans la denture interne (8) et dégagées de la denture interne (8) afin de faire tourner l'arbre creux (7) ou l'unité de guidage (9) autour de l'axe de rotation (2) pendant l'engagement de chacune avec un contact à plat entre la denture (11a, 11b, 11c) en question et la denture interne (8).

2. Engrenage coaxial (1) selon la revendication 1, **caractérisé en ce que** les dentures (11a, 11b, 11c) des premières faces (10a, 10b, 10c) présentent chacune plusieurs dents, de préférence trois.

3. Engrenage coaxial (1) selon l'une des revendications 1 à 2, **caractérisé en ce que** les bielles (6a, 6b, 6c) sont disposées les unes derrière les autres, vues le long de l'axe de rotation (2).

4. Engrenage coaxial (1) selon l'une des revendications 1 à 2, **caractérisé en ce que** les bielles (6a, 6b, 6c) se trouvent au moins en partie dans un plan commun qui est perpendiculaire à l'axe de rotation (2).

5. Engrenage coaxial (1) selon la revendication 4, **caractérisé en ce que**, dans un plan parallèle à l'axe de rotation (2) et/ou qui inclut l'axe de rotation (2), au moins une des bielles (6a, 6b, 6c), de préférence au moins deux, présentent une section sensiblement en forme de U ou en forme de J.

6. Engrenage coaxial (1) selon l'une des revendications 1 à 5, **caractérisé en ce qu'**au moins deux des pistons (5a, 5b, 5c) ont des diamètres (13) différents, les diamètres (13) étant mesurés dans une direction transversale et chaque direction transversale étant perpendiculaire à la direction radiale (12a, 12b, 12c) correspondante.

7. Engrenage coaxial (1) selon l'une des revendications 1 à 6, **caractérisé en ce que**, au moins pour un des pistons (5a, 5b, 5c) et de préférence pour tous les pistons (5a, 5b, 5c), un élément piézoélectrique (14a, 14b, 14c) est prévu pour modifier une longueur (15) du piston (5a, 5b, 5c) en question, mesurée parallèlement à la direction radiale (12a, 12b, 12c) correspondante (15).

8. Engrenage coaxial (1) selon l'une des revendications 1 à 7, **caractérisé en ce que** les pistons (5a, 5b, 5c) présentent chacun, sur une deuxième face (16a, 16b, 16c) opposée à la première face (10a, 10b, 10c), une denture (17a, 17b, 17c) qui comprend au moins une dent, **en ce qu'**une bague intérieure (18) supportée avec possibilité de rotation autour de l'axe de rotation (2) et munie d'une denture externe (19) est prévue, l'unité de guidage (9) étant au moins en partie disposée entre la bague intérieure (18) et l'arbre creux (7), les dentures (17a, 17b, 17c) des deuxièmes faces (16a, 16b, 16c) des pistons (5a, 5b, 5c) pouvant être engagées successivement dans la denture externe (19) et dégagées de la denture externe (19) afin de faire tourner la bague intérieure (18) ou l'unité de guidage (9) autour de l'axe de rotation (2) pendant l'engagement de chacune, avec un contact à plat entre la denture (17a, 17b, 17c) en question et la denture externe (19).

9. Engrenage coaxial (1) selon la revendication 8, **caractérisé en ce que** la denture interne (8) de l'arbre creux (7) et la denture externe (19) de la bague intérieure (18) comportent le même nombre de dents.

10. Engrenage coaxial (1) selon l'une des revendications 1 à 9, **caractérisé en ce que**, pour au moins deux des pistons (5a, 5b, 5c), les orientations radiales (12a, 12b, 12c) correspondantes forment un angle (20) différent de zéro, mesuré autour de l'axe de rotation (2).

11. Engrenage coaxial (1) selon l'une des revendications 1 à 10, **caractérisé en ce que** le vilebrequin (3) est creux.

12. Engrenage coaxial (1) selon l'une des revendications 1 à 11, **caractérisé en ce que** l'unité de guidage (9) est disposée de façon immobile par rapport à l'axe de rotation (2).

13. Engrenage coaxial (1) selon l'une des revendications 1 à 11, **caractérisé en ce que** l'unité de guidage (9) est supportée avec possibilité de rotation autour de l'axe de rotation (2), des moyens étant de préférence prévus pour freiner une rotation de l'unité de guidage (9) autour de l'axe de rotation (2).
